Europäisches Patentamt

European Patent Office

Office européen des brevets

(11) Publication number: **0 097 128**
**B1**

(12) **EUROPEAN PATENT SPECIFICATION**

(45) Date of publication of patent specification: **08.04.87**

(51) Int. Cl.⁴: **A 23 C 9/123**, A 23 C 9/137

(21) Application number: **83810260.6**

(22) Date of filing: **14.06.83**

(54) **Soured milk product.**

(30) Priority: **15.06.82 CH 3703/82**

(43) Date of publication of application:
**28.12.83 Bulletin 83/52**

(45) Publication of the grant of the patent:
**08.04.87 Bulletin 87/15**

(84) Designated Contracting States:
**AT BE CH DE FR GB IT LI NL**

(56) References cited:
**DE-A-2 412 915**
**DE-B-1 053 295**
**DE-C- 666 685**
**GB-A-1 465 263**
**US-A-2 005 245**
**US-A-3 969 534**

**DEUTSCHE MOLKEREI-ZEITUNG, F. 21, 1973,
pages 848-856, Kempten-Allgäu, DE; F.X.
KAMMERER: "Zur Wahl von Gelier- und
Verdickungsmitteln sowie Geliersirup für
Milcherzeugnisse"**
**"YOGHOURT" Rasic et al. Vol. I, 1978, pages 57,
276-277**

The file contains technical information
submitted after the application was filed and
not included in this specification

(73) Proprietor: **CPC INTERNATIONAL INC.
International Plaza P.O. Box 8000
Englewood Cliffs New Jersey 07632 (US)**
(84) **BE DE FR GB IT NL AT**

(73) Proprietor: **Knorr Naehrmittel
Aktiengesellschaft
Bahnhofstrasse 502
CH-8240 Thayngen (CH)**
(84) **CH LI**

(72) Inventor: **Müller, Günter
Kellergasse 32
D-7110 Flein (DE)**
Inventor: **Volley, Werner
D-7107 Bad Wimpfen (DE)**
Inventor: **Zumstein, Ernst
Drusenbergstrasse 21
CH-8810 Horgen (CH)**

(74) Representative: **Justitz-Wormser, Daisy P., Dipl.-
Chem. et al
PATENTANWALTS-BUREAU ISLER AG Postfach
6940 Walchestrasse 23
CH-8023 Zürich (CH)**

Courier Press, Leamington Spa, England.

## Description

The present invention relates to a soured milk product which can be turned out of its container. Known soured milk products, in particular yoghurt, sour milk and sour cream are admittedly obtainable in a compact form, but they can only very rarely be turned out of their container and, in particular, they do not retain their consistency. On the contrary, after only a short period, they exhibit signs of syneresis, that is to say they exude water and the structure disintegrates.

A compact soured milk product has further been disclosed in GB-patent 1,465,263. This product is gelled with starch and/or gelatin to form a pudding or jelly-like dessert.

In his publication "Zur Wahl von Gelier- und Verdickungsmitteln sowie Geliersirup für Milcherzeugnisse" (Deutsche Molkerei-Zeitung, Kempten-Allgäu, F. 21, 1973, pages 848—856) F. X. Kammerer reviews the effects of the most important binding and gelling agents allowed by the German Law for preparing milk products. He mentions the use of starches, gelatin, mixtures thereof, pectins and mixtures of pectins with gelatin, the latter especially for preparing spoonable yoghurts.

There has, however, for a long time been a demand for a spoonable product which can be turned out of its container and which does not have the above disadvantages.

The present invention relates to a soured milk product which can be turned out of its container and, having been turned out, remains compact for at lesat 2 to 3 hours and which has a pH between 4.2 and the isoelectric point of the product "Remaining compact" as used herein means, that turned out of its container the product retains its shape and texture and does neither contract nor subside. The product can be in the form of a natural product, but it can also contain various flavouring agents, such as, for example, salt, sweetening agents, agents producing a bitter taste, mocha coffee, ceramel, chocolate cream, chocolate, malt products, vanilla, rum aroma, constituents of fruit or vegetables in the form of pieces, purees or juices, aromas and other flavouring agents which are natural, identical to natural agents or artificial. However, the natural product can also have a sauce underneath it, for example a sweet highly viscous mocha coffee, caramel, chocolate or fruit sauce known as a "topping", which on turning out then runs down over the solid milk product, as is known, for example, for caramel toppings.

The desired retention of consistency of the product is achieved according to the invention by the use of a hydrocolloid mixture having a particular composition.

Thus the present invention further relates to a process for the manufacture of a soured milk product which can be turned out of its container, of the type defined above, which is characterised in that milk, preferably a milk which has had the dry matter increased, is mixed with a hydrocolloid mixture, which contains at least one starch-containing binder and at least one starch-free gelling agent, and which preferably, in a 1% aqueous solution at 20°C, exhibits a pH of 4.1 to 4.4 and a viscosity of about 25 cps, measured with a Brookfield RVT viscometer, spindle No. 2, 100 rpm, the mixture is homogenised, optionally mixed with flavourings and/or constituents of fruit and/or vegetables, and is fermented in the presence of acid-forming, in particular yoghurt-forming, bacteria, the fermentation being terminated at a pH which provides the desired final pH between 4.2 and the isoelectric point of the product.

The milk is used in a liquid form, an enriched fresh milk preferably being used. However, a concentrate or a product reconstituted from milk powder can also be used.

The hydrocolloid mixture is advantageously used in an amount of about 0.5 per cent by weight relative to the total weight. It preferably contains starch in the form of the starch products customarily used in foodstuffs, such as wheat, maize, rice, tapioca or potato starch in an unmodified or modified form and the like as binder and a mixture of pectin and gelatine, in the weight ratio of 3:2 to 3.15:2, as the gelling agent.

The ratio of weights of starch to starch-free gelling agent is generally 1:1.

If required, stabilisers of known types, for example maltodextrin, can be added to the mixture before fermentation, for example to keep pieces of fruit, vegetables, nuts and the like in suspension.

Furthermore, whole egg or egg yolk in a fresh or dried form, for example in an amount of about 1 to 2 per cent by weight of dry matter relative to the total weight, can be added to the mixture to improve the shine and to refine the flavour.

For the production of the soured milk product, in general all micro-organisms known to the specialist can be used, and these do not need to be specified here in more detail, since the relevant data can be taken from any reference book on dairy science, in which all details of fermentation can also be found. Reference may be made, for example, to the work by J. L. Rašić and J. A. Kurmann, "Fermented Milk Products" (published by Techn. Dairy Publish. House, Copenhagen, 1978). Yoghurt-forming bacteria are preferably used and the invention is described in the following text in relation to bacteria of this type for purposes of simplicity. Customarily, about 2 to 4 per cent by weight of inoculating bacteria, advantageously a mixture of rod-shaped bacilli and streptococci, are inoculated. Then the mass is filled into containers of the desired size (portion containers or bulk packs).

The fermentation is customarily carried out at 42 to 44°C within 3 to 3 1/2 hours. It is terminated, advantageously by cooling, as soon as that pH is achieved which provides the desired final pH. In this context, account should be taken of the fact that a certain degree of after-souring occurs, since the souring action generally cannot be terminated instantaneously. The suitable pH range for the termination of fermentation can, however, be easily determined by a few trials. For example, it is 4.9 to 5 in order to obtain a final pH of about 4.5.

**0 097 128**

When the product is to be sold together with a topping or a sauce, compartmented containers can be used, one compartment of which is filled with sauce before closure.

A particularly attractive product is obtained when containers, in particular portion containers, are used which are initially provided with a layer of the desired sauce, which advantageously contains about 0.1 to 0.5 per cent by weight of carrageenate, or are optionally provided with caramelised sugar, and then the milk mixture is filled in and subjected to fermentation.

The product according to the invention has a very fine and pleasant consistency and exhibits a slight acid flavour, which is very compatible with the flavour of all fruits and vegetables, but, in particular, has a much less disturbing effect on non-acidic types of flavour, such as coffee, chocolate, vanilla and the like than was hitherto the case for the conventional soured milk products. The products have the customary stability on storage.

In the following examples all percentage data are given as per cent by weight relative to the total weight of the product. In all these examples, the milk components were initially mixed with the hydrocolloid mixture and, if appropriate, the egg and the stabiliser, then the suspension was heated to about 60°C, homogenised at 150 to 200 bar and subsequently pasteurised up to 93°C. After maintaining this temperature for about 6 minutes, it was possible to add flavourings, such as sugar, salt, constituents of fruit or vegetables and other aroma substances and the mixture was cooled to about 46 to 47°C. Then at this temperature, about 3% of a culture of yoghurt microbes was inoculated. The product was then filled into tubs which were then sealed. Where appropriate, a sauce was initially filled into the tubs. Fermentation was carried out at 42 to 44°C for 3 to 3 1/2 hours. At pH 4.9 to 5, it was terminated by cooling. The final product had a pH of about 4.5, could be turned out of its container easily, was compact and had an excellent flavour. The following examples contain the recipes which have been worked out in accordance with the above general process.

However, it is emphasised that the above process conditions can be varied in a known manner and that other acid-forming micro-organisms known to the specialist can also be used, for example, Streptococcus cremoris, Streptococcus lactis, Lactobacillus helveticus and others.

Example 1

| | | |
|---|---|---|
| Full-cream milk (3.7% fat) | 400.000 kg | 83.475% |
| Sugar | 49.000 kg | 10.200% |
| Skimmed milk powder | 13.500 kg | 2.800% |
| Maize starch | 1.000 kg | 0.205% |
| Apple pectin | 0.650 kg | 0.135% |
| Gelatine | 0.400 kg | 0.085% |
| Yoghurt culture (Streptococcus thermophilus and lactobacillus bulgaricus in a ratio of 6:4) | 15.000 kg | 3.100% |
| | 479.650 kg | 100.000% |

3

## 0 097 128

### Example 2

| | | |
|---|---|---|
| Water | 320.000 kg | 61.520% |
| Skimmed milk powder | 50.000 kg | 9.600% |
| Cream (35% fat) | 50.000 kg | 9.600% |
| Glucose (dextrose) | 35.000 kg | 6.700% |
| Potato starch | 1.000 kg | 0.200% |
| Pectin | 0.650 kg | 0.120% |
| Gelatine | 0.400 kg | 0.080% |
| Chicken egg (whole egg) | 2.500 kg | 0.480% |
| Strawberry fruit base (60° Brix) | 26.000 kg | 5.0 |
| Fructose | 20.000 kg | 3.800% |
| Yogurt culture | 15.000 kg | 2.900% |
| | 520.550 kg | 100.000% |

### Example 3

| | | |
|---|---|---|
| Skimmed milk concentrate | 150.000 kg | 29.850% |
| Water | 248.000 kg | 49.325% |
| Maltodextrin | 45.000 kg | 8.950% |
| Butterfat | 15.000 kg | 3.000% |
| Liquid egg yolk | 1.500 kg | 0.300% |
| Wheat starch | 1.000 kg | 0.200% |
| Pectin | 0.650 kg | 0.130% |
| Gelatine | 0.400 kg | 0.080% |
| Cyclamate | 0.200 kg | 0.040% |
| Saccharin | 0.025 kg | 0.005% |
| Yogurt culture | 15.000 kg | 3.000% |
| | 476.775 kg | |
| Topping sauce Alsa chocolate sauce | 17.000 kg | 3.400% |
| Water | 7.500 kg | 1.500% |
| Stabiliser (maize starch, carrageenate) | 1.100 kg | 0.200% |
| | 502.375 kg | 100.000% |

**0 097 128**

Example 4

|  | kg | % |
|---|---|---|
| Skimmed milk | 335,000 | 67,70 |
| Glucose sirup (60% dry matter) | 85,000 | 17,17 |
| Sunflower-/peanut oil | 15,500 | 3,13 |
| Maltodextrin | 15,000 | 3,03 |
| Tapioca starch | 1,000 | 0,20 |
| Pectin | 0,750 | 0,15 |
| Gelatine | 0,400 | 0,08 |
| Emulsifier (GMS) Glyceromonostearate | 1,350 | 0,27 |
| Culture (Lactobacillus acidophilus and Bacterium bifidum in a ratio of 1:1) | 16,000 | 3,23 |
| Topping sauce Raspberry pulp | 12,000 | 2,42 |
| Sugar | 12,000 | 2,42 |
| Stabiliser (potato starch, xanthan, carrageenate) | 1,000 | 0,20 |
| | 495,000 | 100,00 |

Example 5

|  | kg | % |
|---|---|---|
| Soybeanmilk* (12% dry matter) | 410,000 | 82,82 |
| Cane sugar, brown | 50,000 | 10,10 |
| Rice starch | 1,000 | 0,20 |
| Citric pectin | 0,750 | 0,15 |
| Gelatine | 0,450 | 0,09 |
| Whole eggpowder | 1,050 | 0,21 |
| Cherry concentrate (60° Brix) | 16,750 | 3,38 |
| Culture (mixture of Streptococcus cremoris and Lactobacillus xylosus) | 15,000 | 3,05 |
| | 495,000 | 100,00 |

*Manufactured according to: "Soybeans: Chemistry and Technology" Volume 1
Edited by Allan K. Smith, PH.D. 1977
AVI Publishing Company, Inc. Westport, Connecticut, USA

**Claims**

1. A milk product which comprises a starch-containing binder and a pectin/gelatin mixture gelling agent, characterised in that the milk product is a soured milk product which can be turned out of its container and having been turned out remains compact for at least 2 to 3 hours and which has a pH between 4.2 and the isoelectric point of the product and in which the ratio of pectins to gelatin lies in the range 3:2 to 3.75:2 by weight.

2. Milk product according to patent claim 1, characterised in that it contains one or more of the following components: egg, salt, sweetening agents, agents for producing a bitter taste, flavouring agents which are natural, identical to natural agents or artificial, constituents of fruit or vegetables and stabilisers.

3. Milk product according to patent claim 1 or 2, characterised in that it contains, as the starch-containing binder, starch in an unmodified or modified form, the ratio of weights of binder to gelling agent preferably being 1:1.

4. Milk product according to one of patent claims 1 to 3, characterised in that it is contained in a portion container, at the bottom of which there is a sauce.

5. Process for manufacturing a milk product according to patent claim 1, characterised in that milk is mixed with a mixture of pectins and gelatin which further contains at least one starch containing binder, the weight ratio of pectins to gelatin being in the range of 3:2 to 3.75:2, and which preferably has, in 1% strength aqueous solution at 20°C, a pH of 4.1 to 4.4 and a viscosity of about 25 cps. measured with a Brookfield RVT viscometer, spindle No. 2, 100 rpm, the mixture is homogenised and pasteurised, and is then fermented in the presence of acid-forming, for example yoghurt-forming bacteria, the fermentation being terminated at a pH which provides the desired final pH between 4.2 and the isoelectric point of the product.

6. Process according to patent claim 5, characterised in that the pectins/gelatin mixture consists of 1 part by weight of starch in an unmodified or modified form and 1 part by weight of a mixture of pectins and gelatin, and the pectins/gelatin mixture is preferably added in an amount of 0.5 per cent by weight relative to the total weight of the product.

7. Process according to patent claim 5 or 6, characterised in that after homogenisation of the mixture, flavouring agents which are natural, identical to natural agents or artificial, or mixture thereof and/or constituents of fruit and/or vegetables are added thereto.

8. Process according to one of patent claims 5 to 7, characterised in that before fermentation of the mixture, whole egg or egg yolk in a fresh or dried state and, if appropriate, stabilisers are added thereto.

9. Process according to one of patent claims 5 to 8, characterised in that the fermentation is terminated by cooling, for example at a pH in the range from 4.9 to 5.0.

10. Process according to one of patent claims 5 to 9, characterised in that before fermentation of mixture is filled into containers which optionally contain a layer of a sauce or of caramelised sugar.

**Patentansprüche**

1. Milchprodukt, welches ein stärkehaltiges Bindemittel und ein Pektin/Gelatine-Gemisch-Gelierungsmittel enthält, dadurch gekennzeichnet, dass das Milchprodukt ein gesäuertes Milchprodukt ist, welches aus seinem Behälter gestürzt werden kann und in gestürztem Zustand während mindestens 2 bis 3 Stunden stichfest bleibt, und welches ein pH zwischen 4,2 und dem isoelektrischen Punkt des Produktes aufweist, und in welchem das Gewichtsverhältnis von Pektinen zu Gelatine im Bereich von 3:2 bis 3,75:2 liegt.

2. Milchprodukt nach Patentanspruch 1, dadurch gekennzeichnet, dass es eine oder mehrere der folgenden Bestandteile enthält: Ei, Salz, Süssstofte, Bitterstoffe, natürliche, naturidentishce oder künstliche geschmackgebende Stoffe, Fruchtanteile, Gemüseanteile und Stabilisatoren.

3. Milchprodukt nach Patentanspruch 1 oder 2, dadurch gekennzeichnet, dass es als stärkehaltiges Bindemittel Stärke in unmodifizierter oder modifizierter Form enthält, wobei das Gewichtsverhältnis von Bindemittel zu Geliermittel vorzugsweise 1:1 beträgt.

4. Milchprodukt nach einem der Patentansprüche 1 bis 3, dadurch gekennzeichnet, dass es in einem Portionengefäss vorliegt, an dessen Boden sich eine Sauce befindet.

5. Verfahren zur Herstellung eines Milchproduktes nach Patentanspruch 1, dadurch gekennzeichnet, dass man Milch mit einem Gemisch von Pektinen und Gelatine, welches ausserdem mindestens ein stärkehaltiges Bindemittel enthält, vermischt, wobei das Gewichtsverhältnis von Pektinen zu Gelatine im Bereich von 3:2 bis 3,75:2 und welches vorzugsweise in 1 %iger wässeriger Lösung bei 20°C ein pH von 4,1 bis 4,4 und eine Viskosität von etwa 25 cps gemessen mit einem Brookfield-Viskosimeter RVT, Spindel No. 2, 100 upm, aufweist, das Gemisch homogenisiert und in Gegenwart von säurebildenden, z.B. joghurtbildenden Bakterien fermentiert, wobei die Fermentierung bei einem pH beendet wird, welches das gewünschte End-pH zwischen 4,2 und dem isoelektrischen Punkt des Produktes ergibt.

6. Verfahren nach Patentanspruch 5, dadurch gekennzeichnet, dass das Pektin/Gelatine-Gemisch aus einem Gewichtsteil Stärke in unmodifizierter oder modifizierter Form und ein Gewichtsteil eines Gemisches auf Pektinen und Gelatine besteht und das Pektine/Gelatine-Gemisch vorzugsweise in einer Menge von 0,5 Gewichtsprozent bezogen auf das Gesamtgewicht des Produktes zugesetzt wird.

7. Verfahren nach Patentanspruch 5 oder 6, dadurch gekennzeichnet, dass man dem Gemisch nach der Homogenisierung natürliche, natüridentische oder künstliche geschmackgebende Stoffe oder Gemische davon und/oder Frucht- und/oder Gemüseanteile zusetzt.

8. Verfahren nach einem der Patentansprüche 5 bis 7, dadurch gekennzeichnet, dass man dem Gemisch vor der Fermentation Vollei oder Eigelb in frischem oder getrocknetem Zustand und gegebenenfalls Stabilisatoren zusetzt.

9. Verfahren nach einem der Patentansprüche 5 bis 8, dadurch gekennzeichnet, dass die Fermentation durch Kühlung beendet wird, z.B. bei einem pH im Bereich von 4,9 bis 5,0.

10. Verfahren nach einem der Patentansprüche 5 bis 9, dadurch gekennzeichnet, dass man das Gemisch vor der Fermentation in Gefässe abfüllt, welche gegebenenfalls eine Schicht aus einer Sauce oder aus gebranntem Zucker enthalten.

**Revendications**

1. Produit laitier qui comprend un liant amylacé et un agent gélifiant formé d'un mélange pectine/gélatine, caractérisé en ce qu'il est un produit laitier acidifié qui peut être sorti de son récipient et qui, après avoir été sorti, reste compact pendant au moins 2 à 3 heures et qui a un pH compris entre 4,2 et le point isoélectrique du produit, et dans lequel le rapport des pectines à la gélatine se situe dans l'intervalle de 3:2 à 3,75:2 en poids.

2. Produit laitier suivant la revendication 1, caractérisé en ce qu'il contient un ou plusieurs des composants suivants: oeuf, sel, édulcorants, agents communiquant un goût amère, arômes naturels, identiques à des agents naturels ou artificiels, constituants de fruits ou légumes et agents stabilisants.

3. Produit laitier suivant la revendication 1 ou 2, caractérisé en ce qu'il contient, comme liant amylacé, de l'amidon sous une forme non modifiée ou modifiée, le rapport du poids de liant au poids d'agent gélifiant étant de préférence égal à 1:1.

4. Produit laitier suivant l'une des revendications 1 à 3, caractérisé en ce qu'il est contenu dans un récipient à portion à la base duquel se trouve une sauce.

5. Procédé d'obtention d'un produit laitier suivant la revendication 1, caractérisé en ce que du lait est mélangé avec un mélange de pectines et de gélatine qui contient en outre au moins un liant amylacé, le rapport en poids des pectines à la gélatine étant compris dans l'intervalle de 3:2 à 3,75:2, et qui a de préférence, en solution aqueuse à 1% à 20°C, un pH de 4,1 à 4,4 et une viscosité d'environ 25 cps, mesurée avec un viscosimètre Brookfield RVT, broche n° 2, 100 tr/min, le mélange est homogénéisé et pasteurisé, puis il est soumis à une fermentation en présence de bactéries acidogènes, formant par exemple du yogourt, la fermentation étant arrêtée à un pH qui représente le pH final désiré entre 4,2 et le point isoélectrique du produit.

6. Procédé suivant la revendication 5, caractérisé en ce que le mélange pectines/gélatine comprend une partie en poids d'amidon sous une forme non modifiée ou modifiée et une partie en poids d'un mélange de pectines et de gélatine, et le mélange pectines/gélatine est de préférence ajouté en une quantité de 0,5% en poids par rapport au poids total du produit.

7. Procédé suivant la revendication 5 ou 6, caractérisé en ce que, après l'homogénéisation du mélange, ce dernier est additionné d'arômes qui sont naturels, identiques à des agents naturels ou artificiels, ou un mélange de ces arômes et/ou des constituants de fruits et/ou de légumes.

8. Procédé suivant l'une quelconque des revendications 5 à 7, caractérisé en ce que, avant la fermentation du mélange, de l'oeuf entier ou du jaune d'oeuf à l'état frais ou en poudre et, le cas échéant, des agents stabilisants, sont ajoutés au mélange.

9. Procédé suivant l'une quelconque des revendications 5 à 8, caractérisé en ce que la fermentation est arrêtée par refroidissement, par exemple à un pH compris dans l'intervalle de 4,9 à 5,0.

10. Procédé suivant l'une quelconque des revendications 5 à 9, caractérisé en ce que le mélange, avant la fermentation, est chargé dans des récipients qui contiennent facultativement une couche d'une sauce ou de sucre caramélisé.